# EUROPEAN PATENT SPECIFICATION

(11) **EP 4 175 036 B1**
(45) Date of publication and mention of the grant of the patent: **05.11.2025**
(21) Application number: 21898651.1
(22) Date of filing: 25.11.2021
(51) Int. Cl.: H01M 50/204, H01M 50/296, H01M 50/298, H01M 50/251

(54) **BATTERY MODULE, BATTERY PACK, AND POWER STORAGE DEVICE**
BATTERIEMODUL, BATTERIEPACK UND ENERGIESPEICHERVORRICHTUNG
MODULE DE BATTERIE, BLOC-BATTERIE ET DISPOSITIF DE STOCKAGE D'ÉNERGIE

(30) Priority: 27.11.2020 KR 20200163271
(43) Date of publication of application: 03.05.2023
(73) Proprietor: LG Energy Solution, Ltd., Seoul 07335 (KR)
(72) Inventor: JEONG, Gyeong-Su, Daejeon 34122 (KR); LEE, Bum-Hyun, Daejeon 34122 (KR); LIM, Jae-Bum, Daejeon 34122 (KR); HONG, Seok-Hyun, Daejeon 34122 (KR)
(74) Representative: Plasseraud IP
(86) International application number: PCT/KR2021/017566
(87) International publication number: WO 2022/114825

(56) References cited:
- DE-A1- 102016 225 598
- JP-A- 2016 039 096
- JP-A- H07 320 717
- KR-A- 20190 106 311
- KR-A- 20190 106 311
- KR-B1- 101 023 353
- US-A- 4 572 878
- US-A1- 2016 336 577
- US-A1- 2018 175 342

## Description

### TECHNICAL FIELD

The present disclosure relates to a battery module, a battery pack including the battery module, and a power storage device, and more particularly, to a battery module having high efficiency and a high energy density by increasing degrees of freedom with respect to disposition of a connection member.

The present application claims priority to Korean Patent Application No. 10-2020-0163271 filed on November 27, 2020 in the Republic of Korea.

### BACKGROUND ART

Currently commercialized secondary batteries include nickel-cadmium batteries, nickel-hydrogen batteries, nickel-zinc batteries, and lithium secondary batteries. Among them, compared to nickel-based secondary batteries, lithium secondary batteries have almost no memory effect and thus are freely charged and discharged and have a very low self-discharge rate and have a high energy density.

These lithium secondary batteries mainly use a lithium-based oxide and a carbon material as a positive electrode active material and a negative electrode active material, respectively. A lithium secondary battery includes an electrode assembly in which a positive electrode plate and a negative electrode plate respectively coated with a positive electrode active material and a negative electrode active material are disposed with a separator interposed therebetween, and an outer casing for sealingly accommodating the electrode assembly together with an electrolyte, that is, a battery pouch outer casing.

Recently, secondary batteries have been widely used not only in small devices such as portable electronic devices, but also in medium and large devices such as automobiles and power storage devices. When used in such medium and large devices, a large number of secondary batteries are electrically connected to increase capacity and output. In particular, pouch-type secondary batteries are widely used in such medium and large devices due to an advantage of easy stacking.

In recent years, demand for a plurality of secondary batteries electrically connected in series and/or parallel, and a battery pack including a battery module in which these secondary batteries have been accommodated and a battery management system (BMS) is increasing as the need for a large-capacity structure including usage as an energy storage source increases.

A conventional battery pack is provided with a plurality of battery modules. Such a battery module includes an external terminal electrically connected to a plurality of secondary batteries accommodated therein. The external terminals of the plurality of battery modules are electrically connected to each other through a power cable or a busbar. Because a conventional battery pack includes various embedded components in addition to the battery modules, various cables such as a sensing cable in addition to the power cable or bus bar need to be disposed therein.

However, in a conventional battery module, an arrangement position of the power cable or the busbar connected to an external terminal is fixed in only one direction, so there is a great limitation in changing the arrangement position of the power cable or the busbar depending on situations. Accordingly, when a new battery pack is designed, it is necessary to change the arrangement of power cables or busbars according to the arrangement of battery modules. Therefore, it is inconvenient to design a new battery module every time. Moreover, manufacturing costs and manufacturing time of a battery pack increase due to such redesign.

In addition, when the arrangement position of the power cable or busbar of the battery module cannot be changed, the length of the power cable or busbar increases and the arrangement form becomes very complicated, resulting in the generation of a dead zone inside the battery pack. This leads to a reduction of the space efficiency and energy density of the battery pack.

Furthermore, when the power cable or busbar is inevitably arranged close to other cables because the arrangement position cannot be changed, contact between connection members occurs, and a short circuit is highly likely to occur in coating-peeled portions. Therefore, in the conventional battery pack, more efforts need to be made to prevent ignition or explosion due to a short circuit.

Document DE 10 2016 225 598 A1 relates to an energy storage device. Document KR 2019 0106311 A pertains to a battery module with a short-circuit protection structure.

### DISCLOSURE

### Technical Problem

The present disclosure is designed to solve the problems of the related art, and therefore the present disclosure is directed to providing a battery module having high efficiency and a high energy density by increasing degrees of freedom with respect to disposition of a connection member.

These and other objects and advantages of the present disclosure may be understood from the following detailed description and will become more fully apparent from the exemplary embodiments of the present disclosure. Also, it will be easily understood that the objects and advantages of the present disclosure may be realized by the means shown in the appended claims and combinations thereof.

### Technical Solution

**In** one aspect of the present disclosure, there is provided a battery module including
a plurality of battery cells;
an external terminal electrically connected to the plurality of battery cells and provided in front of or at rear of the plurality of battery cells; and
a cover plate having electrical insulation properties, configured to cover at least one side of the plurality of battery cells, having an exposure hole formed to expose at least a portion of the external terminal, and including a protection portion having a plate shape protruding forward or rearward from each of both sides of the exposure hole in a left-right direction to form an accommodating space for accommodating a portion of the external terminal, and having an upper portion and a lower portion of the accommodating space being open, wherein the protection portion includes:
   extension parts extending forward or rearward from both sides of the exposure hole of the cover plate in the left-right direction, respectively; and
   bent parts extending from respective ends of the extension parts in a protrusion direction to be bent in a left or right direction.

The battery module may further include a connection member comprising an extension extending from the accommodating space of the protection portion to the open upper or lower portion and a connection terminal connected to an end of the extension and configured to electrically contact the external terminal.

The battery module may further include a terminal cover fixed to the bent parts of the protection portion to cover at least one side of the accommodating space of the protection portion.

The terminal cover may include:
a body portion configured to cover a front side or rear side of the accommodating space of the protection portion; and
a locking portion extending from one end of the body portion in a bent form to cover the upper or lower side of the accommodating space of the protection portion and configured to be supported by an upper end or lower end of the protection portion.

The terminal cover may include:
a first fixing rib extending from the body portion to face an outer surface of the bent part of the protection portion; and
a second fixing rib extending from the body portion to face an inner surface of the bent part of the protection portion.

The bent part of the protection portion may be interposed between the first fixing rib and the second fixing rib.

A fixing protrusion protruding to support one end of the bent part may be formed on the second fixing rib.

The terminal cover may further include
a guide portion provided on the other end of the body portion and including an insertion groove formed by recessing a portion of the guide portion.

The battery module may further include a side cover configured such that an end of the side cover is coupled to the cover plate and configured to cover a lateral portion of the plurality of battery cells.

In one aspect of the present disclosure, there is provided a battery pack including at least one battery module described above.

In one aspect of the present disclosure, there is provided a power storage device including at least one battery module described above.

### Advantageous Effects

According to one aspect of the present disclosure, a battery module of the present disclosure includes a cover plate including a protection portion having open upper and lower portions, and thus, a connection member may be selectively inserted from the top to the bottom or from the bottom to the top. Therefore, the present disclosure may increase degrees of freedom with respect to disposition of the connection member for electrically connecting various battery modules, thereby reducing factors that may cause a short circuit due to contact with other cables with damaged coatings. Ultimately, the battery module according to the present disclosure may increase the safety of a battery pack against fire.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a schematic perspective view of a battery module according to an embodiment of the present disclosure.
FIG. 2 is a schematic exploded perspective view of separated components of a battery module according to an embodiment of the present disclosure.
FIG. 3 is a partial perspective view of some components of a battery module according to an embodiment of the present disclosure.
FIG. 4 is a partial perspective view of some components of a battery module according to an embodiment of the present disclosure.
FIG. 5 is a bottom perspective view of a terminal cover of a battery module according to an embodiment of the present disclosure.
FIG. 6 is a partial perspective view of some components of a battery module according to another embodiment of the present disclosure.
FIG. 7 is a schematic perspective view of a battery pack according to an embodiment of the present disclosure.
FIG. 8 is a schematic perspective view of a battery pack according to another embodiment of the present disclosure.
FIG. 9 is a schematic front view of a battery pack according to another embodiment of the present disclosure.

### MODE FOR DISCLOSURE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the present disclosure, so it should be understood that other equivalents and modifications could be made thereto without departing from the scope of the present disclosure.

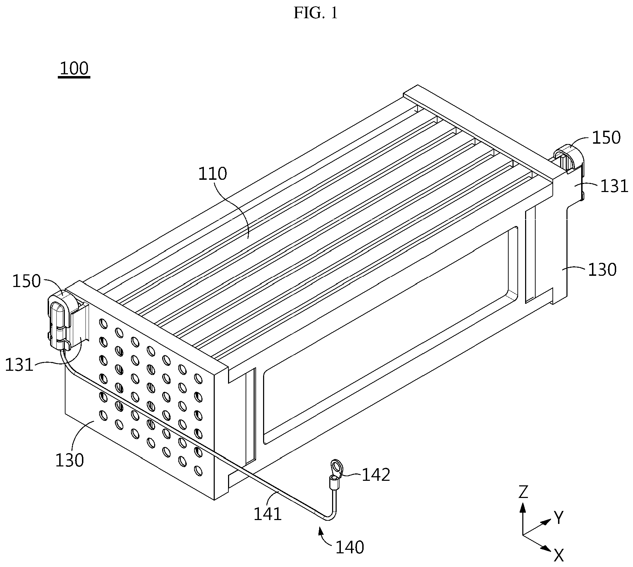

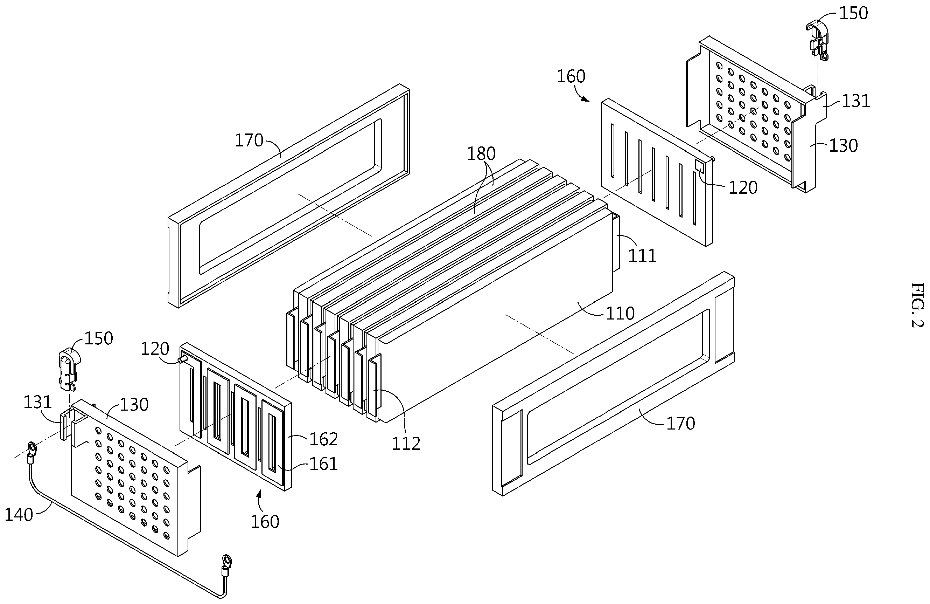

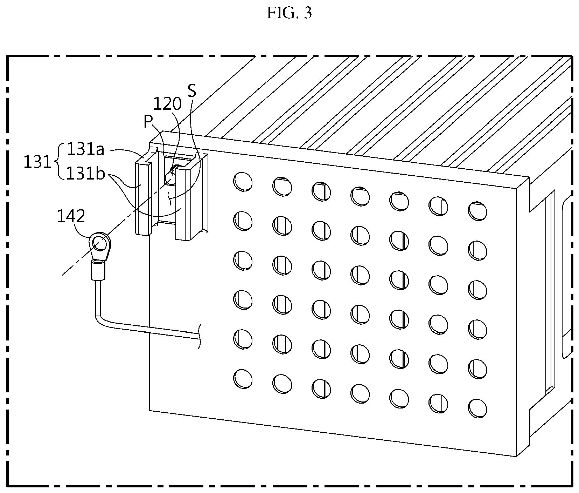

FIG. 1 is a schematic perspective view of a battery module according to an embodiment of the present disclosure. FIG. 2 is a schematic exploded perspective view of separated components of a battery module according to an embodiment of the present disclosure. FIG. 3 is a partial perspective view of some components of a battery module according to an embodiment of the present disclosure.

Referring to FIGS. 1 through 3, a battery module 100 according to an embodiment of the present disclosure may include a plurality of battery cells 110, an external terminal 120, a busbar assembly 160, and a cover plate 130.

In detail, the plurality of battery cells 110 may be, for example, pouch-type battery cells 110. For example, as shown in FIG. 2, seven pouch-type battery cells 110 may be stacked on one another side by side in a left-right direction (X direction). Each of the pouch-type battery cells 110 may include an electrode assembly (not shown), an electrolyte (not shown), and a pouch.

As shown in FIG. 2, each of the battery cells 110 may include electrode leads 112 and 111 formed on front and rear ends of the battery cell 110, respectively. For example, as shown in FIG. 2, each of the plurality of battery cells 110 may include a positive electrode terminal 112 and a negative electrode terminal 111 on its front and rear ends, respectively.

However, not only the pouch-type battery cells 110 are not limitedly applied to a battery module 200 according to the present disclosure, and various types of battery cells 110 known at the time of filing of the present disclosure may be employed in the battery module 200 according to the present disclosure.

Furthermore, the present disclosure may include a plurality of cartridges 180 in each of which an inner space is formed to accommodate a portion of each of a plurality of battery cells. For example, as shown in FIG. 2, six cartridges 180 may be provided between the seven battery cells. In other words, each cartridge 180 may be interposed between two battery cells.

The busbar assembly 160 may include one or more busbars 161 configured to electrically connect the plurality of battery cells 110 to one another, and two or more busbar frames 162 configured to mount the one or more busbars 161 on outer sides of the two or more busbar frames 162. The external terminal 120 may be provided on the bus bar 161 located on a most distal end from among the bus bars 161.

In detail, the external terminal 120 may be configured to be electrically connected to the plurality of battery cells 110. The external terminal 120 may be a positive electrode external terminal 120 or a negative electrode external terminal 120 according to polarity. For example, as shown in FIG. 2, a positive electrode external terminal may be located in front of the plurality of battery cells 110, and a negative electrode external terminal may be located at rear of the plurality of battery cells 110. The external terminal 120 may have a bolt shape protruding forward or a bolt shape protruding rearward.

The external terminal 120 may include a screw thread formed thereon to which a nut may be screw-coupled. The external terminal 120 may be configured to be electrically connected to a power cable including a ring terminal. For example, as shown in FIG. 3, the external terminal 120 may have a bolt shape protruding forward, and after the ring terminal of the power cable is fitted onto the external terminal 120, the ring terminal may be fastened to the external terminal 120 by using a nut (not shown). The external terminal 120 may be insert-injected and coupled to the busbar frame 162.

The cover plate 130 may include an electrically insulating material. The electrically insulating material may be, for example, polyvinyl chloride or polyethylene terephthalate. However, the cover plate 130 is not limited to these materials, and any material having electrical insulation may be applied. The cover plate 130 may be configured to cover at least one side of the plurality of battery cells 110. For example, the cover plate 130 may have a plate shape extending in top-bottom and left-right directions. The cover plate 130 may be located to cover a front or rear side of the plurality of battery cells 110.

The cover plate 130 may include an exposure hole P formed therein. The exposure hole P may be perforated such that at least a portion of the external terminal 120 is exposed. The cover plate 130 may include a protection portion 131. The protection portion 131 may be configured to cover a portion of the external terminal 120 penetrating through the exposure hole P. The protection portion 131 may have a plate shape protruding forward or rearward from both sides of the exposure hole P in the left-right direction. An accommodating space S accommodating a portion of the external terminal 120 may be formed. The accommodating space S may be an isolated space between plate shapes of the protection portion 131 protruding frontward or rearward. The protection portion 131 may be configured such that an upper portion and a lower portion of the accommodating space S are open. In other words, the protection portion 131 may not include a portion that covers the upper and lower portions of the external terminal 120 and thus may be configured so that a connection member 140 is inserted from the top to the bottom or inserted from the bottom to the top.

Therefore, according to this configuration of the present disclosure, due to inclusion of the cover plate 130 including the protection portion 131 having open upper and lower portions, the connection member 140 may be selectively inserted from the top to the bottom or from the bottom to the top. Accordingly, the present disclosure may increase degrees of freedom with respect to disposition of power cables that electrically connect various battery modules 100, thereby reducing factors that may cause a short circuit due to contact with other cables with damaged coatings. Ultimately, the battery module 100 according to the present disclosure may increase the safety of a battery pack against fire.

Referring back to FIG. 1, the battery module may include a side cover 170. For example, as shown in FIG. 2, the battery module may include two side covers 170 disposed on left and right sides of the plurality of battery cells, respectively. Each side cover 170 may be configured to cover a lateral portion of the plurality of battery cells. The side cover 170 may be configured such that both ends there of in the front-back direction are coupled to the cover plate 130. A rear end or front end of the cover plate 130 may be welded to a front end or rear end of the side cover 170. Alternatively, the rear end or front end of the cover plate 130 may be hooked to the front end or rear end of the side cover 170. For example, although not shown in the drawing, a hook may be formed on a portion (rear end or front end) of the cover plate 130 facing the side cover 170, and a coupling groove to which the hook is coupled may be formed in a portion (front end or rear end) of the side cover 170 facing the cover plate 130.

Referring back to FIGS. 1 through 3, the battery module 100 according to an embodiment of the present disclosure may further include the connection member 140. The connection member 140 may include an extension 141 and a connection terminal 142. The extension 141 may be disposed to extend from the accommodating space S of the protection portion 131 to the open upper or lower portion of the protection portion 131. The connection terminal 142 may be connected to an end of the extension 141. The connection terminal 142 may be configured to be electrically connected to the external terminal 120.

For example, the connection member 140 may have a connection cable or a busbar. As shown in FIG. 3, when the connection member 140 is a power cable, the connection member 140 may include an extension 141 provided with an electric wire, and a connection terminal 142 having a ring shape. The external terminal 142 may be inserted into the ring of the connection terminal 142.

When the connection member 140 is a busbar (not shown), a hole into which the external terminal 120 is inserted may be formed in one end of the busbar. The busbar may have a shape extending toward another battery module. The other end of the bus bar may be in contact with an external terminal of the other battery module.

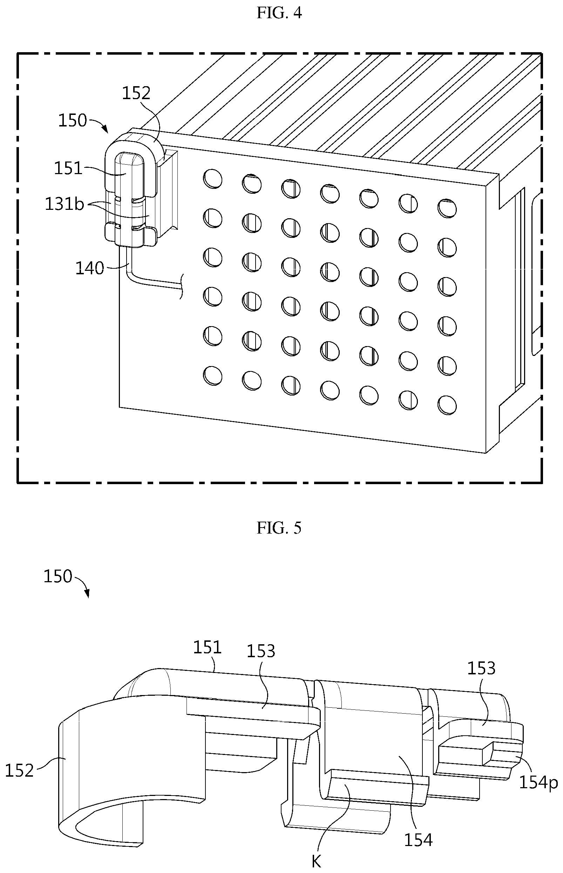

FIG. 4 is a partial perspective view of some components of a battery module according to an embodiment of the present disclosure. FIG. 5 is a bottom perspective view of a terminal cover of a battery module according to an embodiment of the present disclosure. For reference, FIG. 3 illustrates the battery module 100 from which a terminal cover 150 has been removed, for convenience of drawing description, and FIG. 4 illustrates the battery module 100 to which the terminal cover 150 has been coupled.

Referring to FIGS. 4 and 5 in conjunction with FIG. 3, the protection portion 131 of the battery module 100 according to an embodiment of the present disclosure may include extension parts 131a and bent parts 131b. The extension parts 131a may have shapes respectively extending forward or rearward from both sides of the exposure hole P of the cover plate 130 in the left-right direction. The extension parts 131a may each have a plate shape extending in the top-bottom direction. The extension parts 131a may be spaced apart from each other in the left-right direction.

The bent parts 131b may be formed to extend from respective ends of the extension parts 131a in a protrusion direction to be bent in a left or right direction. For example, as shown in FIG. 3, one bent part 131b may have a shape bent in the right direction from the end of an extension part 131a relatively positioned on the left in the protrusion direction. The other bent part 131b may have a shape bent in the left direction from the end of an extension part 131a relatively positioned on the right in the protrusion direction.

The battery module 100 according to an embodiment of the present disclosure may further include the terminal cover 150. The terminal cover 150 may include an electrically insulating plastic material. Alternatively, the terminal cover 150 may include a metal material having an electrically insulating coating layer formed on the outer side thereof. The terminal cover 150 may be configured to cover at least one side of the accommodating space S of the protection portion 131. For example, the terminal cover 150 may be configured to cover a front side of the accommodating space S of the protection portion 131. The terminal cover 150 may be fixed to the bent parts 131b of the protection portion 131.

For example, as shown in FIG. 4, the terminal cover 150 may be fixed to the bent parts 131b by moving from the top to the bottom of the protection portion 131. Alternatively, the terminal cover 150 may be fixed to the bent parts 131b by moving from the bottom to the top of the protection portion 131. A coupling structure between the terminal cover 150 and the bent parts 131b will now be described in more detail.

Therefore, according to this configuration of the present disclosure, due to further inclusion of the terminal cover 150 to cover at least one side of the accommodating space S of the protection portion 131, inflow of a conductive foreign material into the external terminal 120 of the battery module 100 may be more effectively prevented. Accordingly, the present disclosure may prevent an electrical short or short-circuit of a battery module with other components.

Referring back to FIGS. 4 and 5, the terminal cover 150 of the battery module 100 according to an embodiment of the present disclosure may include a body portion 151 and a locking portion 152. The body portion 151 may be configured to cover the front or rear side of the accommodating space S of the protection portion 131. **In** other words, the body portion 151 may be a portion of the terminal cover 150 extending in the top-bottom direction and the left-right directions.

The locking portion 152 may be configured to cover the upper or lower side of the accommodating space S of the protection portion 131. The locking portion 152 may extend from one end of the body portion 151 in a bent form. For example, as shown in FIG. 4, the locking portion 152 may be formed to extend from the upper end of the body portion 151 in a rearwardly-bent form.

Moreover, the locking portion 152 may be configured to be supported by an upper end or lower end of the protection portion 131. For example, as shown in FIG. 4, a lower end of the locking portion 152 of the terminal cover 150 may be supported upward by the upper end of the protection portion 131. Although not shown in the drawings, when the terminal cover 150 moves from the bottom to the top and is fixed to the bent parts 131b of the protection portion 131, the locking portion 152 of the terminal cover 150 may be located at the lower end of the protection portion 131, and the upper end of the locking portion 152 may be supported in a downward direction by the lower end of the protection portion 131.

Therefore, according to this configuration of the present disclosure, due to the inclusion of the terminal cover 150 having the body portion 151 and the locking portion 152, the upper or lower portion of the accommodating space S of the protection portion 131 may be covered, and the locking portion 152 may be supported by the upper end or lower end of the protection portion 131, and thus movement of the terminal cover 150 in the lower direction or the upper direction may be blocked. Therefore, according to the present disclosure, inflow of a conductive external material into the external terminal 120 of the battery module 100 may be more effectively prevented. Moreover, the terminal cover 150 may be easily fixed to the protection portion 131, thereby improving assembly processability.

Referring back to FIGS. 3 through 5, the terminal cover 150 of the battery module 100 according to an embodiment of the present disclosure may include a first fixing rib 153 and a second fixing rib 154. The first fixing rib 153 may have a shape extending from the body portion 151 to face an outer surface of the bent part 131b of the protection portion 131. For example, as shown in FIG. 5, the first fixing rib 153 may extend from an end of the body portion 151. When the terminal cover 150 is fixed to the protection portion 131, the first fixing rib 153 may be located to face the outer surface of the bent part 131b of the protection portion 131.

The second fixing rib 154 may have a shape extending from the body portion 151 to face an inner surface of the bent part 131b of the protection portion 131. A hook K configured to press the inner surface of the bent part 131b may be formed on an end of the second fixing rib 154. For example, as shown in FIG. 5, the second fixing rib 154 may extend from an end of the body portion 151. When the terminal cover 150 is fixed to the protection portion 131, the second fixing rib 154 may be located to face the inner surface of the bent part 131b of the protection portion 131.

In other words, the terminal cover 150 may be inserted by sliding the bent part 131b of the protection portion 131 into a space between the first fixing rib 153 and the second fixing rib 154. At this time, the second fixing rib 154 may be elastically deformed by being pressed by an operator. In other words, second fixing ribs 154 provided on both sides of the body portion 151 may be moved toward the inside of the terminal cover 150 by an operator and, in this state, may be mounted on the protection portion 131. Thereafter, the operator may release the pressurization state of the second fixing rib 154, and thus the bent part 131b of the protection portion 131 may be interposed between the first fixing rib 153 and the second fixing rib 154. In other words, due to the interposition of the bent part 131b of the protection portion 131 between the first fixing rib 153 and the second fixing rib 154, the terminal cover 150 may be fixed to the protection portion 131.

The second fixing rib 154 may be configured to be elastically bent. For example, when the terminal cover 150 is fixed to the protection portion 131 and the operator presses the second fixing rib 154 with his or her fingers, the second fixing rib 154 may be separated from the inner surface of the bent part 131b.

Referring back to FIGS. 4 and 5, a fixing protrusion 154p may be formed on a second fixing rib 154 of a terminal cover 150 of a battery module 100 according to another embodiment of the present disclosure. The fixing protrusion 154p may protrude in a direction (rearward or forward) in which the protection portion 131 is located, to support one end of the bent part 131b of the protection portion 131. For example, as shown in FIG. 5, the terminal cover 150 may include the fixing protrusion 154p on each of the second fixing ribs 154 respectively provided on both sides of the body portion 151. For example, as shown in FIG. 4, the fixing protrusion 154p of the terminal cover 150 may be configured to support the lower end of the bent part 131b of the protection portion 131 in the upper direction. In other words, the terminal cover 150 may restrict the movement of the terminal cover 150 in the lower direction by the locking portion 152, and at the same time, may block the movement of the terminal cover 150 in the upper direction by the fixing protrusion 154p.

Therefore, according to this configuration of the present disclosure, the terminal cover 150 of the present disclosure may maintain its fixed state to the protection portion 131 by including the fixing protrusion 154p protruding to support one end of the bent part 131b. Accordingly, the present disclosure may prevent separation of the terminal cover 150 from the protection portion 131 of the cover plate 130.

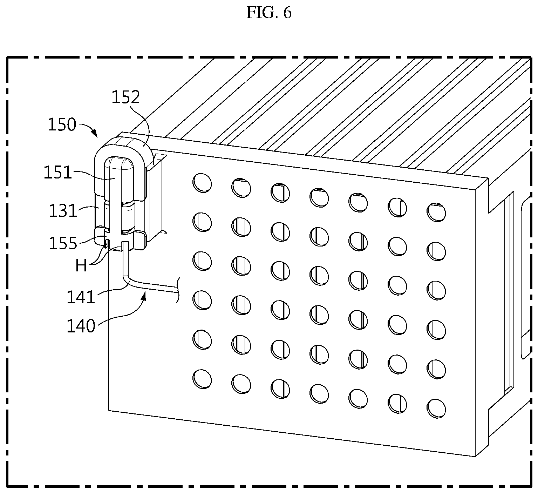

FIG. 6 is a partial perspective view of some components of a battery module according to another embodiment of the present disclosure.

Referring to FIG. 6, a terminal cover 150 of a battery module 100 according to another embodiment of the present disclosure may further include a guide portion 155, compared with the terminal cover 150 of FIG. 5. The other components of the terminal cover 150 of FIG. 6 may be the same as those of the terminal cover 150 of FIG. 5.

In detail, the guide portion 155 may be provided on an upper end or lower end of the body portion 151. For example, as shown in FIG. 6, the terminal cover 150 may include the guide portion 155 on its lower end. The guide portion 155 may include an insertion groove H formed therein. The insertion groove H may be formed by recessing a portion of the guide portion 155 from an end of the guide portion 155. The insertion groove H may be configured such that the extension 141 of the connection member 140 is inserted. In other words, the guide portion 155 may fix the position of the extension 141 of the connection member 140 to prevent the position of the extension 141 of the connection member 140 from being changed during use.

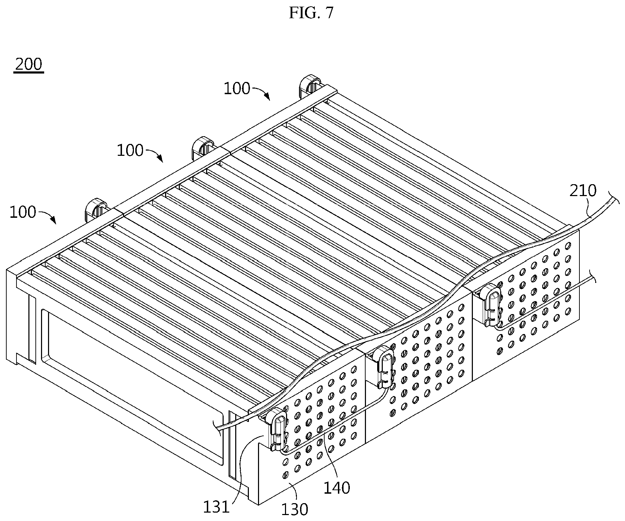

Therefore, according to this configuration of the present disclosure, the terminal cover 150 of the present disclosure is provided with the guide portion 155 to thereby effectively prevent a connection portion of the connection member 140 connected to the external terminal 120 from being moved by an external impact. Accordingly, the present disclosure may prevent occurrence of a short circuit when the extension 141 of the connection member 140 comes into contact with another conductive component or comes into contact with another cable 210 of FIG. 7.

FIG. 7 is a schematic perspective view of a battery pack according to an embodiment of the present disclosure.

Referring to FIG. 7 in conjunction with FIG. 2, a battery pack 200 according to an embodiment of the present disclosure includes at least one battery module 100. For example, as shown in FIG. 7, the battery module 200 according to the present disclosure may include three battery module 100 arranged in one direction. An external terminal 120 of one battery module 100 may be electrically connected to an external terminal 120 of another battery module 100 through the connection member 140. For example, as shown in FIG. 7, an extension of the connection member 140 may extend downward from an accommodating space of the protection portion, and then extend toward the other battery module 100 positioned on one side in a bent form.

For example, when the other cable 210 is disposed by extending in a horizontal direction on top of the protection portion 131 of each of the three battery modules 100, power cables 140 electrically connecting the three battery modules 100 to each other may be disposed to extend downward from the accommodating space of the protection portion 131. Accordingly, the present disclosure may greatly reduce the possibility that a short circuit occurs when the power cables 140 contact the other cable 210, thereby increasing safety.

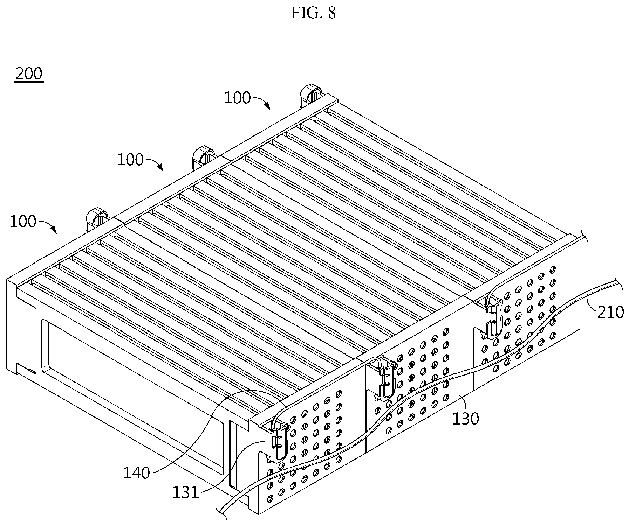

FIG. 8 is a schematic perspective view of a battery pack according to another embodiment of the present disclosure.

Referring to FIG. 8 in conjunction with FIG. 2, the extension 141 of the connection member 140 may extend upward from the accommodating space of the protection portion 131, and then extend toward the other battery module 100 positioned on one side in a bent form.

For example, when the other cable 210 is disposed by extending in the horizontal direction on bottom of the protection portion 131 of each of the three battery modules 100, power cables 140 electrically connecting the three battery modules 100 to each other may be disposed to extend upward from the accommodating space of the protection portion 131. Accordingly, the present disclosure may greatly reduce the possibility that a short circuit occurs when the power cables 140 contact the other cable 210, thereby increasing safety.

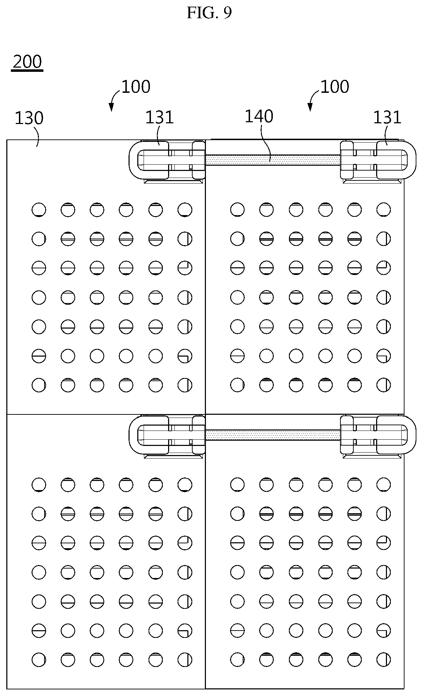

FIG. 9 is a schematic front view of a battery pack according to another embodiment of the present disclosure.

Referring to FIG. 9, a battery module 200 according to another embodiment of the present disclosure may be different from the battery pack of FIG. 7 in terms of a layout form of the battery modules 100.

Each of the battery modules 100 of FIGS. 3 and 9 may have an arrangement by rotating the battery module 100 of FIG. 1 clockwise by 90 degrees. Four battery modules 100 may be stacked in two stages. The protection portion 131 may be located in an upper right portion of each of the four battery modules 100. In a battery module 100 on the left side of the center of the four battery modules 100, the power cable 140 extends toward one side from the accommodating space S of the protection portion 131. **In** a battery module 100 on the right side of the center of the four battery modules 100, the power cable 140 extends toward the other side from the accommodating space of the protection portion 131. Accordingly, in the battery pack of the present disclosure, the power cables 140 electrically connecting a plurality of battery modules 100 may be arranged to each extend by a shortest distance (in a straight line), thereby minimizing a length between the power cables 140. Ultimately, according to the present disclosure, the size, weight, and manufacturing costs of the battery pack 200 may be reduced, and the energy density and production efficiency of the battery pack 200 may be increased.

The battery pack may include a battery management device (not shown) capable of controlling charging and discharging of the battery module 100.

Meanwhile, a power storage device (not shown) according to an embodiment of the present disclosure includes at least one battery module 100. The power storage device may include a rack case configured to mount the battery module 100 thereon.

Meanwhile, although terms indicating directions such as up, down, left, right, front, and rear are used in the present specification, these terms are only for convenience of description, and it is apparent to those skilled in the art that these terms may vary depending on a position of a target object or a position of an observer.

### [Description of reference numerals]

| | | | |
|---|---|---|---|
| 100: | battery module | 110: | battery cell |
| 120: | external terminal | 130: | cover plate |
| P: | exposure hole | S: | accommodating space |
| 131: | protection portion | 131a, 131b: | extension part, bent part |
| 140: | connection member | 141, 142: | extension, connection terminal |
| 150: | terminal cover | 151, 152: | body portion, locking portion |
| 153, 154, 154p: | first fixing rib, second fixing rib, fixing protrusion | | |
| 155: | guide portion | H: | insertion groove |
| 160, 161, 162: | busbar assembly, busbar, busbar frame | | |
| 170: | side cover | 180: | cartridge |
| 200: | battery pack | | |

## Claims

1. A battery module (100) comprising:
a plurality of battery cells (110);
an external terminal (120) electrically connected to the plurality of battery cells (110) and provided in front of or at rear of the plurality of battery cells (110); and
a cover plate (130) having electrical insulation properties, configured to cover at least one side of the plurality of battery cells (110), having an exposure hole (P) formed to expose at least a portion of the external terminal (120), and **characterized in that** it further comprises a protection portion (131) having a plate shape protruding forward or rearward from each of both sides of the exposure hole (P) in a left-right direction to form an accommodating space (S) for accommodating a portion of the external terminal (120), and an upper portion and a lower portion of the accommodating space (S) being open,
wherein the protection portion (131) comprises:
extension parts (131a) extending forward or rearward from both sides of the exposure hole (P) of the cover plate (130) in the left-right direction, respectively; and
bent parts (131b) extending from respective ends of the extension parts (131a) in a protrusion direction to be bent in a left or right direction.

2. The battery module (100) of claim 1, further comprising a connection member (140) comprising an extension (141) extending from the accommodating space (S) of the protection portion (131) to the open upper or lower portion and a connection terminal (142) connected to an end of the extension (141) and configured to electrically contact the external terminal (120).

3. The battery module (100) of claim 1, further comprising a terminal cover (150) fixed to the bent parts (131b) of the protection portion (131) to cover at least one side of the accommodating space (S) of the protection portion (131).

4. The battery module of claim 3, wherein the terminal cover (150) comprises:
a body portion (151) configured to cover a front side or rear side of the accommodating space (S) of the protection portion (131); and
a locking portion (152) extending from one end of the body portion (151) in a bent form to cover the upper or lower side of the accommodating space (S) of the protection portion (131) and configured to be supported by an upper end or lower end of the protection portion (131).

5. The battery module of claim 4, wherein
the terminal cover (150) comprises:
a first fixing rib (153) extending from the body portion (151) to face an outer surface of the bent part (131b) of the protection portion (131); and
a second fixing rib (154) extending from the body portion (151) to face an inner surface of the bent part (131b) of the protection portion (131), and
the bent part (131b) of the protection portion (131) is interposed between the first fixing rib (153) and the second fixing rib (154).

6. The battery module (100) of claim 5, wherein a fixing protrusion (154p) protruding to support one end of the bent part (131b) is formed on the second fixing rib (154).

7. The battery module (100) of claim 4, wherein the terminal cover (150) further comprises a guide portion (155) provided on the other end of the body portion (151) and including an insertion groove (H) formed by recessing a portion of the guide portion (155).

8. The battery module (100) of claim 1, further comprising a side cover (170) configured such that an end of the side cover (170) is coupled to the cover plate (130) and configured to cover a lateral portion of the plurality of battery cells (110).

9. A battery pack (200) comprising at least one battery module (100) according to any one of claims 1 through 8.

10. A power storage device comprising at least one battery module (100) according to any one of claims 1 through 8.

## Patentansprüche

1. Batteriemodul (100), umfassend:
eine Mehrzahl von Batteriezellen (110);
einen externen Anschluss (120), welcher elektrisch mit der Mehrzahl von Batteriezellen (110) verbunden ist und welcher vor oder hinter der Mehrzahl von Batteriezellen (110) bereitgestellt ist; und
eine Abdeckplatte (130), welche elektrisch isolierende Eigenschaften aufweist, welche dazu eingerichtet ist, wenigstens eine Seite der Mehrzahl von Batteriezellen (110) abzudecken und welche ein Exponierungsloch (P) aufweist, welches gebildet ist, um wenigstens einen Abschnitt des externen Anschlusses (120) zu exponieren, und **dadurch gekennzeichnet, dass** sie ferner einen Schutzabschnitt (131) umfasst, welcher eine Plattenform aufweist, welche in einer Links-Rechts-Richtung von jeder der beiden Seiten des Exponierungslochs (P) nach vorne oder nach hinten hervorsteht, um einen Aufnahmeraum (S) zum Aufnehmen eines Abschnitts des externen Anschlusses (120) sowie einen oberen Abschnitt und einen unteren Abschnitt des Aufnahmeraums (S) zu bilden, welcher offen ist,
wobei der Schutzabschnitt (131) umfasst:
Erstreckungsteile (131a), welche sich in der Links-Rechts-Richtung von jeder der beiden Seiten des Exponierungslochs (P) der Abdeckplatte (130) jeweils nach vorne oder nach hinten erstrecken; und
gebogene Teile (131b), welche sich in einer Vorstandsrichtung von jeweiligen Enden der Erstreckungsteile (131a) erstrecken, um in einer Links-Oder-Rechts-Richtung gebogen zu sein.

2. Batteriemodul (100) nach Anspruch 1, ferner umfassend ein Verbindungselement (140), welches eine Erweiterung (141), welche sich von dem Aufnahmeraum (S) des Schutzabschnitts (131) zu dem offenen oberen oder unteren Abschnitt erstreckt, und einen Verbindungsanschluss (142) umfasst, welcher mit einem Ende der Erweiterung (141) verbunden ist und welcher dazu eingerichtet ist, den externen Anschluss (120) elektrisch zu kontaktieren.

3. Batteriemodul (100) nach Anspruch 1, ferner umfassend eine Anschlussabdeckung (150), welche an den gebogenen Teilen (131b) des Schutzabschnitts (131) fixiert ist, um wenigstens eine Seite des Aufnahmeraums (S) des Schutzabschnitts (131) abzudecken.

4. Batteriemodul nach Anspruch 3, wobei die Anschlussabdeckung (150) umfasst: einen Körperabschnitt (151), welcher dazu eingerichtet ist, eine vordere Seite oder eine hintere Seite des Aufnahmeraums (S) des Schutzabschnitts (131) abzudecken; und
einen Sperrabschnitt (152), welcher sich von einem Ende des Körperabschnitts (151) in einer gebogenen Form erstreckt, um die obere oder untere Seite des Aufnahmeraums (S) des Schutzabschnitts (131) abzudecken, und welcher dazu eingerichtet ist, durch ein oberes Ende oder ein unteres Ende des Schutzabschnitts (131) gehaltert zu sein.

5. Batteriemodul nach Anspruch 4, wobei
die Anschlussabdeckung (150) umfasst:
eine erste Fixierrippe (153), welche sich von dem Körperabschnitt (151) erstreckt, um einer äußeren Fläche des gebogenen Teils (131b) des Schutzabschnitts (131) zugewandt zu sein; und
eine zweite Fixierrippe (154), welche sich von dem Körperabschnitt (151) erstreckt, um einer inneren Fläche des gebogenen Teils (131b) des Schutzabschnitts (131) zugewandt zu sein, und
wobei der gebogene Teil (131b) des Schutzabschnitts (131) zwischen die erste Fixierrippe (153) und die zweite Fixierrippe (154) eingefügt ist.

6. Batteriemodul (100) nach Anspruch 5, wobei ein Fixiervorsprung (154p), welcher hervorsteht, um ein Ende des gebogenen Teils (131b) zu haltern, an der zweiten Fixierrippe (154) gebildet ist.

7. Batteriemodul (100) nach Anspruch 4, wobei die Anschlussabdeckung (150) ferner einen Führungsabschnitt (155) umfasst, welcher an dem anderen Ende des Körperabschnitts (151) bereitgestellt ist und welcher eine Einführnut (H) umfasst, welche durch ein Vertiefen eines Abschnitts des Führungsabschnitts (155) gebildet ist.

8. Batteriemodul (100) nach Anspruch 1, ferner umfassend eine Seitenabdeckung (170), welche derart eingerichtet ist, dass ein Ende der Seitenabdeckung (170) mit der Abdeckplatte (130) gekoppelt ist, und welche dazu eingerichtet ist, einen lateralen Abschnitt der Mehrzahl von Batteriezellen (110) abzudecken.

9. Batteriepack (200), umfassend wenigstens ein Batteriemodul (100) nach einem der Ansprüche 1 bis 8.

10. Energiespeichervorrichtung, umfassend wenigstens ein Batteriemodul (100) nach einem der Ansprüche 1 bis 8.

## Revendications

1. Module de batterie (100) comprenant :
une pluralité de cellules de batterie (110) ;
une borne externe (120) connectée électriquement à la pluralité de cellules de batterie (110) et située à l'avant ou à l'arrière de la pluralité de cellules de batterie (110) ; et
une plaque de recouvrement (130) présentant des propriétés d'isolation électrique, configurée pour recouvrir au moins un côté de la pluralité de cellules de batterie (110), présentant un trou d'exposition (P) formé pour exposer au moins une partie de la borne externe (120), et **caractérisé en ce qu'**il comprend en outre une partie de protection (131) ayant une forme de plaque faisant saillie vers l'avant ou vers l'arrière à partir de chacun des deux côtés du trou d'exposition (P) dans une direction gauche-droite, afin de former un espace de logement (S) pour loger une partie de la borne externe (120), la partie supérieure et la partie inférieure de l'espace de logement (S) étant ouvertes,
dans lequel la partie de protection (131) comprend :
des parties d'extension (131a) s'étendant respectivement vers l'avant ou vers l'arrière des deux côtés du trou d'exposition (P) de la plaque de recouvrement (130) dans la direction gauche-droite ; et
des parties courbées (131b) s'étendant à partir d'extrémités respectives des parties d'extension (131a) dans une direction de saillie pour pouvoir être courbées dans une direction gauche ou droite.

2. Module de batterie (100) selon la revendication 1, comprenant en outre un élément de connexion (140) comprenant une extension (141) s'étendant de l'espace de logement (S) de la partie de protection (131) à la partie supérieure ou inférieure ouverte et une borne de connexion (142) connectée à une extrémité de l'extension (141) et configurée pour entrer électriquement en contact avec la borne externe (120).

3. Module de batterie (100) selon la revendication 1, comprenant en outre un couvercle de borne (150) fixé aux parties courbées (131b) de la partie de protection (131) pour recouvrir au moins un côté de l'espace de logement (S) de la partie de protection (131).

4. Module de batterie selon la revendication 3, dans lequel le couvercle de borne (150) comprend :
une partie corps (151) configurée pour recouvrir un côté avant ou un côté arrière de l'espace de logement (S) de la partie de protection (131) ; et
une partie de verrouillage (152) s'étendant à partir d'une extrémité de la partie corps (151) sous une forme courbée pour recouvrir le côté supérieur ou inférieur de l'espace de logement (S) de la partie de protection (131) et configurée pour être supportée par une extrémité supérieure ou une extrémité inférieure de la partie de protection (131).

5. Module de batterie selon la revendication 4, dans lequel
le couvercle de borne (150) comprend :
une première nervure de fixation (153) s'étendant à partir de la partie corps (151) pour faire face à une surface externe de la partie courbée (131b) de la partie de protection (131) ; et
une deuxième nervure de fixation (154) s'étendant à partir de la partie corps (151) pour faire face à une surface interne de la partie courbée (131b) de la partie de protection (131), et
la partie courbée (131b) de la partie de protection (131) est interposée entre la première nervure de fixation (153) et la deuxième nervure de fixation (154).

6. Module de batterie (100) selon la revendication 5, dans lequel une saillie de fixation (154p) faisant saillie pour supporter une extrémité de la partie courbée (131b) est formée sur la deuxième nervure de fixation (154).

7. Module de batterie (100) selon la revendication 4, dans lequel le couvercle de borne (150) comprend en outre une partie de guidage (155) prévue sur l'autre extrémité de la partie corps (151) et comportant une rainure d'insertion (H) formée par évidement d'une partie de la partie de guidage (155).

8. Module de batterie (100) selon la revendication 1, comprenant en outre un couvercle latéral (170) configuré de sorte qu'une extrémité du couvercle latéral (170) soit couplée à la plaque de recouvrement (130) et configuré pour recouvrir une partie latérale de la pluralité de cellules de batterie (110).

9. Bloc-batterie (200) comprenant au moins un module de batterie (100) selon l'une quelconque des revendications 1 à 8.

10. Dispositif de stockage d'énergie comprenant au moins un module de batterie (100) selon l'une quelconque des revendications 1 à 8.
